# EUROPÄISCHE PATENTSCHRIFT

(11) **EP 3 142 129 B1**
(45) Veröffentlichungstag und Bekanntmachung des Hinweises auf die Patenterteilung: **08.11.2017**
(21) Anmeldenummer: 15306375.5
(22) Anmeldetag: 09.09.2015
(51) Int. Cl.: H01B 13/34, H01B 13/14, B29C 47/06, B29C 47/28

(54) **KABEL UND VERFAHREN ZU SEINER HERSTELLUNG**
CABLE AND METHOD FOR ITS PRODUCTION
CÂBLE ET SON PROCÉDÉ DE FABRICATION

(43) Veröffentlichungstag der Anmeldung: 15.03.2017
(73) Patentinhaber: Nexans, 92400 Courbevoie (FR)
(72) Erfinder: Haller, Daniel, 91207 Lauf (DE); Gonzalez Calvo, Encarnacion, 91126 Schwabach (DE)
(74) Vertreter: Feray, Valérie

(56) Entgegenhaltungen:
- DE-B4-102008 063 086
- US-A- 2 521 123
- US-A1- 2013 240 240
- US-B1- 6 634 878

## Beschreibung

Die Erfindung bezieht sich auf ein Verfahren zur Herstellung eines Kabels gemäß dem Oberbegriff des Patentanspruchs 1.

Ein derartiges Verfahren geht beispielsweise aus der US 2,521,123 A hervor.

Mit einem solchen Verfahren hergestellte Kabel sind in unterschiedlichsten Ausführungsformen seit vielen Jahren bekannt und auf dem Markt erhältlich. Es ist auch bekannt, derartige Kabel mit Merkmalen zu versehen, durch welche sie leichter identifizierbar sind. So können in der Seele der Kabel sogenannte Kennfäden vorhanden sein, welche dem Hersteller der Kabel zugeordnet werden können. Es ist auch bekannt, den Mantel der Kabel von außen erkennbar mit Angaben zum Kabeltyp und zum Hersteller zu bedrucken. Des weiteren sind Kabel mit Mänteln bekannt, die aus mindestens zwei unterschiedlichen Farben bestehen, die in Umfangsrichtung gegeneinander abgegrenzt sind.

Aus der DE 10 2008 063 086 B4 geht ein Erdungskabel hervor, in dessen Kabelmantel an seiner Außenseite zwei einander gegenüberliegende linienförmige Markierungen eingearbeitet sind, die beispielsweise eine blaue Farbe haben. Wie diese Markierungen am bzw. im Kabelmantel angebracht werden, ist der Schrift nicht zu entnehmen.

In der US 2013/0240240 A1 ist ein Kabel mit einem der Identifizierung dienenden Streifen beschrieben, der entfernt werden kann. Dazu wird ein solcher Streifen außen auf den Mantel des Kabels aufgebracht, der durch einen speziellen Kleber zwar am Mantel haftet, von demselben aber auch wieder abgezogen werden kann. Wenn der Streifen vom Mantel des Kabels entfernt ist, kann dasselbe für einen anderen Zweck eingesetzt werden, als er durch die Kennzeichnung mittels des Streifens vorgesehen war.

Aus der US 6,634,878 B1 geht ein Spritzkopf zur Erzeugung einer Ummantelung für einen Leiter hervor, mit dem zwei in axialer Richtung verlaufende Streifen in der Ummantelung angebracht werden können. An den Spritzkopf sind dazu ein Hauptextruder und zwei weitere Extruder angeschlossen. Der Hauptextruder erzeugt die Ummantelung. Für die beiden Streifen ist jeweils einer der beiden anderen Extruder vorgesehen. Ihr Material hat eine andere Farbe als die Ummantelung. Die drei Masseströme der drei Extruder werden im Spritzkopf zusammengeführt, den sie gleichzeitig gemeinsam verlassen.

Die eingangs erwähnte US 2,521,123 A beschreibt eine Vorrichtung mit einem Spritzkopf, mit welchem um einen Leiter eine Umhüllung geformt werden kann. Die Umhüllung hat an zwei einander diametral gegenüberliegenden Positionen jeweils einen gegenüber der Umhüllung andersfarbigen Streifen. Die Streifen verlaufen in Achsrichtung des Leiters. Sie sind in das Material der Umhüllung eingebettet. Zur Erzeugung der Streifen ist der Spritzkopf mit zwei voneinander getrennten, kanalartigen Durchlässen ausgerüstet, die von einer zentralen Öffnung ausgehen und in zwei Fließkanäle übergehen. Die Fließkanäle sind an zwei um 180° versetzten Positionen fixiert. Das Material für die Streifen wird über die zentrale Öffnung zugeführt und über die beiden Fließkanäle bis zu der den Leiter umgebenden Umhüllung geführt, in welche sie eingebettet werden.

Der Erfindung liegt die Aufgabe zugrunde, das eingangs geschilderte Kabel so zu gestalten, dass eine dauerhaft sichere Identifizierung desselben sichergestellt ist.

Diese Aufgabe wird entsprechend den kennzeichnenden Merkmalen des Patentanspruchs 1 gelöst.

Das mit diesem Verfahren hergestellte Kabel hat auf seiner ganzen Länge an seiner Oberfläche mindestens einen in axialer Richtung verlaufenden Streifen, der sich farblich vom Material des Mantels abhebt und fest im Material desselben verankert ist. Der Streifen ist in Ko-Extrusions- Technik bei der Erzeugung des Mantels gleichzeitig mit erzeugt und in das Material des Mantels in radialer Richtung eingedrückt. Durch den Streifen ist eine Identifizierung des mit dem demselben versehenen Kabels während der Lebensdauer desselben sichergestellt ist. Für den Streifen wird ein Material verwendet, das sich bei der Herstellung des Kabels bei Anwendung von Wärme und Druck fest mit dem Material des Mantels verbindet. Da beide Materialien fließfähig sind, reicht die in denselben enthaltene Wärme in der Regel aus. Die feste Verbindung beider Materialien ist besonders dann einfach realisierbar, wenn für Mantel und Streifen das gleiche Material verwendet wird, das für Mantel einerseits und Streifen andererseits nur unterschiedlich gefärbt ist. Ein solches Material ist beispielsweise Polyvinylchlorid (PVC).

Für die Herstellung des Kabels wird ein Extruder eingesetzt, mit dem an sich zwei übereinander liegende Schichten in Ko-Extrusion um eine Kabelseele herumgeformt werden können. Ein solcher Extruder wird in der Fachwelt als "Skin-Extruder" bezeichnet. Er hat zwei zunächst getrennte Fließkanäle, einen inneren Fließkanal und einen äußeren Fließkanal, die vor dem Auftreffen auf die Seele des Kabels in einen gemeinsamen Fließkanal übergehen. Zur Erzeugung eines Streifens in einem durch den inneren Fließkanal geförderten Material des Mantels ist der äußere Fließkanal durch eine rundum vorhandene Sperre, die nur einen Durchlaß für das für den Streifen vorgesehene Material hat, rundum verschlossen. Das Material des Streifens wird mit hohem Druck durch den einen Engpaß darstellenden Durchlaß gepreßt, so dass es in radialer Richtung auf das Material des Mantels auftrifft und in dasselbe eingedrückt bzw. eingepreßt wird. Das Material des Streifens verbindet sich dadurch fest mit dem Material des Mantels. Die Tiefe, mit welcher das Material des Streifens in das Material des Mantels eindringt, hängt von der Höhe des aufgewendeten Drucks ab.

Wenn zwei oder mehr in Umfangsrichtung gegeneinander versetzte Streifen erzeugt werden sollen, dann wird eine entsprechende Anzahl von Durchlässen in der Sperre des äußeren Fließkanals vorgesehen.

Ausführungsbeispiele des Erfindungsgegenstandes sind in den Zeichnungen dargestellt.

Es zeigen:
Fig. 1 eine Draufsicht auf einen Abschnitt eines mit dem Verfahren nach der Erfindung hergestellten Kabels mit einem durchgehenden Streifen.
Fig. 2 einen Schnitt durch Fig. 1 längs der Linie II - II.
Fig. 3 eine gegenüber Fig. 2 abgewandelte Ausführungsform des Kabels ebenfalls im Schnitt.
Fig. 4 schematisch ein Schnittbild eines Extruders.
Fig. 5 eine Einzelheit des Extruders nach Fig. 4 in vergrößerter Darstellung.
Fig. 6 und 7 zwei Ansichten einer weiteren Einzelheit des Extruders nach Fig. 4, ebenfalls in vergrößerter Darstellung.
Fig. 8 einen Schnitt durch den Extruder nach Fig. 4 im Bereich einer in demselben angebrachten Sperre.

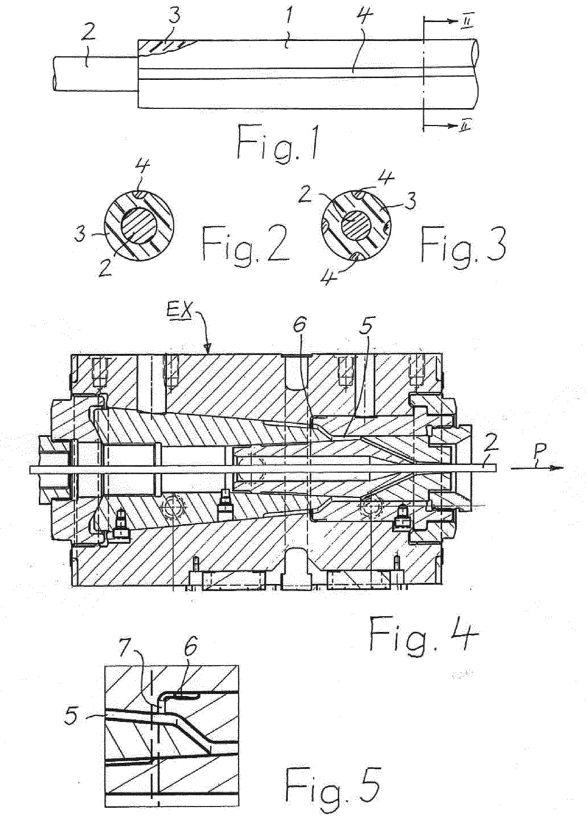

In Fig. 1 ist ein Abschnitt eines Kabels 1 mit einer beliebig aufgebauten Seele 2 gezeigt, in der also elektrische und/oder optische Übertragungselemente enthalten sein können. Sie Seele 2 ist von einem Mantel 3 aus Isoliermaterial umgeben, der beispielsweise aus PVC besteht. Der Mantel 3 hat einen sich in Längsrichtung des Kabels 1 erstreckenden, auf der ganzen Länge desselben vorhandenen Streifen 4, der fest mit dem Material des Mantels 3 verbunden ist. Er besteht ebenfalls beispielsweise aus PVC und hat eine gegenüber dem Mantel 3 andere Farbe.

In Fig. 2 ist nur ein Streifen 4 dargestellt. Das Kabel 1 kann aber auch mehr als einen Streifen 4 haben, und zwar gemäß Fig. 3 beispielsweise vier in Umfangsrichtung des Kabels gegeneinander versetzte Streifen 4.

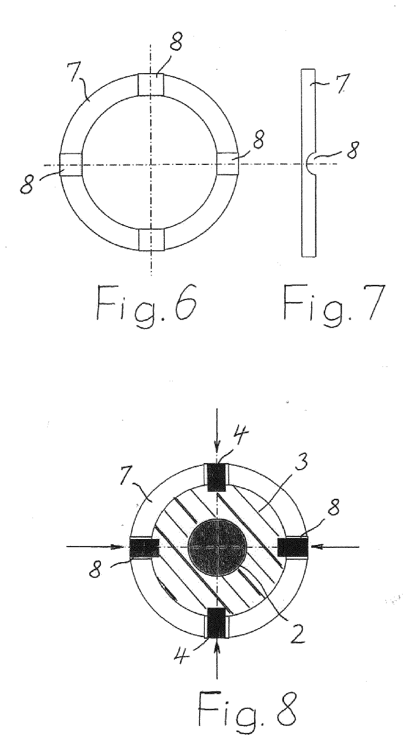

Zur Herstellung des Kabels 1 kann beispielsweise ein in Fig. 4 schematisch wiedergegebener Extruder EX verwendet werden, von dem nur die für das Verständnis der Erfindung notwendigen Teile dargestellt sind. Er hat einen inneren Fließkanal 5, durch welchen das Material für den Mantel 3 geführt und um die Seele 2 des Kabels 1 herumgeformt wird, welche in Richtung des Pfeiles P durch den Extruder EX bewegt wird. Der Extruder EX weist außerdem einen äußeren Fließkanal 6 auf, durch welchen das Material des Streifens 4 zugeführt wird, das in Ko-Extrusion auf das Material des Mantels 3 trifft. Der äußere Fließkanal 6 umgibt den inneren Fließkanal 5 rundum. Er hat gegenüber dem inneren Fließkanal 5 einen kleineren lichten Querschnitt und mündet in einer als Ring 7 ausgebildeten Sperre, welche den inneren Fließkanal 5 rundum umgibt. Der Aufbau des Rings 7 geht beispielsweise aus den Fig. 6 und 7 hervor.

Der Innendurchmesser Di des Rings 7 entspricht dem Außendurchmesser des inneren Fließkanals 5. Das Material des Mantels 3 kann also ungehindert durch den Ring 7 hindurchtreten. Im dargestellten Ausführungsbeispiel hat der Ring 7 vier in Umfangsrichtung gegeneinander versetzte Durchlässe 8, die zur Erzeugung von vier Streifen 4 dienen und durch welche das im äußeren Fließkanal 6 geführte Material der Streifen hindurchgepreßt wird.

Die Durchlässe 8 verlaufen im Ring 7 in radialer Richtung, und zwar über die ganze radiale Breite desselben, so daß sie das in radialer Richtung auf den Ring 7 auftreffende Material der Streifen 4 durchlassen. Die Durchlässe 8 sind nur auf einer Seite des Rings 7 angebracht. Der Ring 7 ist auf der den Durchlässen 8 abgewandten Seite durchgehend ausgeführt, so daß er ein rundum geschlossener Ring ist. Die Durchlässe 8 sind mit Vorteil auf der der Fließrichtung des Materials für den Mantel im inneren Fließkanal 5 abgewandten Seite angebracht.

Beim Betrieb des Extruders EX wird das Material für den Mantel 3 durch den inneren Fließkanal 5 gefördert. Gleichzeitig wird das Material für die Streifen 4 durch den äußeren Fließkanal 6 gefördert, der bis auf die Durchlässe 8 des Rings 7 durch denselben versperrt ist. Der äußere Fließkanal 6 geht also in die Durchlässe 8 des Rings 7 über. Das Material der Streifen 4 wird durch die Durchlässe 8 gedrückt bzw. gepreßt, und zwar bezogen auf den Ring 7 in radialer Richtung. Es trifft entsprechend den in Fig. 8 eingezeichneten Pfeilen in radialer Richtung auf das Material des Mantels 3 auf und wird in radialer Richtung in dasselbe eingedrückt. Die Tiefe, mit welcher das Material der Streifen 4 in das Material des Mantels 3 eingedrückt wird, hängt von der Höhe des Drucks ab, mit dem das Material der Streifen 4 gefördert wird.

## Patentansprüche

1. Verfahren zur Herstellung eines Kabels (1) mit einer elektrische und/oder optische Übertragungselemente enthaltenden Seele (2), die von einem Mantel (3) aus Isoliermaterial umgeben ist, mit welchem an der Außenseite des Kabels auf dessen ganzer Länge mindestens ein in Achsrichtung des Kabels (1) verlaufender Streifen (4) aus Isoliermaterial erzeugt wird, der eine andere Farbe als der Mantel (3) hat und mit welchem die Materialien von Mantel (3) und Streifen (4) mittels eines Extruders (EX) durch Ko-Extrusion gleichzeitig so auf die Seele (2) des Kabels (1) aufgebracht werden, dass das Material des Streifens (4) im Material des Mantels (3) integriert wird, **dadurch gekennzeichnet,**
- **dass** die Materialien von Mantel (3) und Streifen (4) mittels eines Extruders (EX) aufgebracht werden, der einen inneren Fließkanal (5) und einen denselben rundum umgebenden äußeren Fließkanal (6) aufweist, die ineinander übergehen,
- **dass** in dem äußeren Fließkanal (6) eine als Ring (7) ausgebildete, rundum vorhandene Sperre angeordnet wird, die mindestens einen Durchlaß (8) für das im äußeren Fließkanal (6) geförderte Material für einen Streifen (4) hat, und
- **dass** das Material des Streifens (4) mit Druck durch den Durchlaß (8) gepreßt und in den inneren Fließkanal (5) eingedrückt bzw. eingepreßt wird, durch welchen das Material für den Mantel (3) geführt wird, wodurch das Material des Streifens (4) in das Material des Mantels (3) eingedrückt bzw. eingepreßt und dadurch fest mit demselben verbunden bzw. in demselben verankert wird.

2. Anordnung mit einer Vorrichtung zur Durchführung des Verfahrens nach Anspruch 1, mit welcher um die Seele (2) eines Kabels (1) ein Mantel (3) aus Isoliermaterial herumgeformt wird, der mindestens einen in Achsrichtung des Kabels (1) verlaufenden Streifen (4) aus Isoliermaterial aufweist, der in das Material des Mantels (3) integriert und fest mit demselben verbunden ist, **dadurch gekennzeichnet,**
- **dass** die Vorrichtung als Extruder (EX) mit einem inneren Fließkanal (5) und einem denselben rundum umgebenden äußeren Fließkanal (6) ausgeführt ist, die ineinander übergehen, und
- **dass** in dem äußeren Fließkanal (6) eine als Ring (7) ausgebildete Sperre angeordnet ist, die mindestens einen Durchlaß (8) hat, durch welchen im äußeren Fließkanal (6) geführtes Material in radialer Richtung in den inneren Fließkanal (5) geleitet wird.

## Claims

1. Method for producing a cable (1) comprising a core (2) which contains electrical and/or optical transmission elements and is surrounded by a sheath (3) made of insulating material, with which at least one cable strip (4) running along the entire length of the outer side of the cable in the axial direction of the cable (1) is produced, and which has another color than that of the sheath (3), and with which the materials of the sheath (3) and strips (4) are simultaneously so applied to the core (2) of the cable (1) by means of an extruder (EX) through co-extrusion, that the material of the strips (4) is integrated in the material of the sheath (3)
**characterized in that**
- the materials of the sheath (3) and the strips (4) is applied by means of an extruder (EX) comprising an inner flow channel (5) and an outer flow channel (6) completely surrounding the former, and which merge into one another,
- a completely surrounding barrier in the form of a ring (7) is provided in the outer flow channel (6), and has at least one passage (8) which has the material raised in the outer flow channel (6) for a strip (4),
- the material of the strip (4) is pressed under pressure through the passage (8), and is pressed into the inner flow channel (5), through which the material for the sheath (3) is fed, wherein the material of the strip (4) is pushed or pressed into the material of the sheath (3) and is thereby firmly connected or anchored thereto.

2. Arrangement with a device for carrying out the method according to claim 1, wherein a sheath (3) of insulating material is formed around the core (2) of a cable (1), which comprises at least one strip (4) of insulating material extending in the axial direction of the cable (1) and which is integrated into the material of the sheath (3) and is fixedly connected thereto
**characterized in that**
- the device is designed as an extruder (EX) with an inner flow channel (5) and an outer flow channel (6) surrounding the former, and which merge into one another, and
- a completely surrounding barrier in the form of a ring (7) is provided in the outer flow channel (6), and has at least one passage (8) through which the material fed in the outer flow channel (6) is led in a radial direction into the inner flow channel (5).

## Revendications

1. Procédé de fabrication d'un câble (1) avec une âme (2) contenant des éléments de transmission électriques et/ou optiques, qui est entourée d'une enveloppe (3) constituée d'un matériau isolant, avec lequel, à l'extérieur du câble, sur toute sa longueur, est générée au moins une bande (4) de matériau isolant s'étendant dans la direction axiale du câble (1), qui présente une couleur différente de celle de l'enveloppe (3) et avec lequel les matériaux de l'enveloppe (3) et de la bande (4) sont appliqués par coextrusion simultanément sur l'âme (2) du câble (1) au moyen d'une extrudeuse (EX) de façon à ce que le matériau de la bande (4) soit intégré dans le matériau de l'enveloppe (3), **caractérisé en ce que**
- les matériaux de l'enveloppe (3) et de la bande (4) sont appliqués au moyen d'une extrudeuse (EX) qui comprend un canal d'écoulement interne (5) et un canal d'écoulement externe (6) entourant celui-ci sur son pourtour, qui se fondent l'un dans l'autre,
- dans le canal d'écoulement externe (6), est disposée une barrière tout autour conçue comme une bague (7), qui comprend au moins un passage (8) pour le matériau convoyé dans le canal d'écoulement externe (6) pour une bande (4), et
- le matériau de la bande (4) est pressé à travers le passage (8) et comprimé ou pressé vers le canal d'écoulement (5) à travers lequel le matériau pour l'enveloppe (3) est guidé, ce qui permet de comprimer ou de presser le matériau de bande (4) dans le matériau de l'enveloppe (3) et ainsi de le lier ou de le fixer fermement avec celui-ci.

2. Système avec un dispositif de réalisation du procédé selon la revendication 1, avec lequel une enveloppe (3) en matériau isolant est moulée autour de l'âme (2) d'un câble (1), cette enveloppe comprenant au moins une bande (4) de matériau isolant s'étendant dans la direction axiale du câble (1), qui est intégré dans le matériau de l'enveloppe (3) et fermement lié avec celui-ci, **caractérisé en ce que**
- le dispositif est conçu comme une extrudeuse (EX) avec un canal d'écoulement interne (5) et un canal d'écoulement externe (6) qui se fondent l'un dans l'autre et
- dans le canal d'écoulement externe (6), est disposée une barrière conçue comme une bague (7), qui comprend au moins un passage (8) à travers lequel un matériau guidé dans le canal d'écoulement externe (6) est guidé dans la direction radiale vers le canal d'écoulement interne (5).
